Europäisches Patentamt

European Patent Office

Office européen des brevets

(11) Publication number: **0 267 738**
**A2**

## (12) EUROPEAN PATENT APPLICATION

(21) Application number: 87309791.9

(22) Date of filing: 05.11.87

(51) Int. Cl.4: **G01B 11/24** , G01B 11/00

(30) Priority: 08.11.86 GB 8626714

(43) Date of publication of application:
18.05.88 Bulletin 88/20

(84) Designated Contracting States:
AT BE CH DE ES FR GB GR IT LI LU NL SE

(71) Applicant: SYRINX INNOVATIONS LIMITED
74 Great King Street
Edinburgh EH3 6QU(GB)

(72) Inventor: Strachan, John Scott
6 Marchhall Crescent
Edinburgh EH16 5JN(GB)
Inventor: Robertson, Clive
28 Preston Crescent
Inverkeithing Fife KY11 1DR(GB)

(74) Representative: Wotherspoon, Graham et al
Kirkland House Bonhill Alexandria
Dunbartonshire G83 9HT(GB)

(54) Method and apparatus for assessing discrete objects.

(57) An object (22) is assessed in relation to a factor related to its silhouette (for example area) by being positioned adjacent a sheet (10) of a material having pyroelectric properties, such as polyvinylidene fluoride. The object (22) and sheet (10) are exposed to a source of radiant heat, such as a flash tube (16) to induce an electric chsrge in the sheet (10) of an amplitude related to the area of the sheet (10) obscured by the object (22). Other embodiments are described suitable for the assessment of other factors, such as shape and orientation.

Fig. 1

EP 0 267 738 A2

## "Method and apparatus for assessing discrete objects"

This invention relates to a method and apparatus for assessing discrete objects in relation to a factor related to their silhouettes, for example area, shape, orientation, or deformities such as cracks.

Such assessments have hitherto required the use of sophisticated and expensive apparatus such as image analysis systems in which the object is imaged by a television camera to produce a video signal which is digitised and analysed by computer.

An object of the present invention is to provide a method and apparatus for the above purposes which are much simpler and less costly than those used hitherto. To this end, the invention provides tha method and apparatus defined in the appended claims.

Embodiments of the present invention will now be described, by way of example only, with reference to the drawings, in which:

Fig. 1 is a schematic side view illustrating a first embodiment of the invention, for measuring area;

Fig. 2 is an exploded perspective view of a second embodiment, suitable for assessing shape or orientation;

Fig. 3 is a schematic side view illustrating a further embodiment which is a development of the embodiment of Fig. 2;

Fig. 4 is a schematic side view of another embodiment;

Fig. 5 is a plan view of the embodiment of Fig. 4;

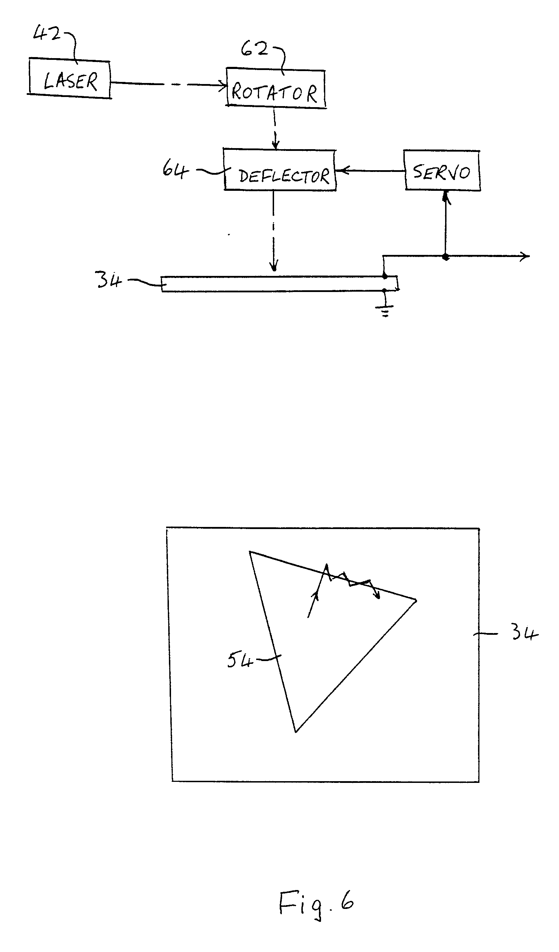

Fig. 6 illustrates a modification of the embodiment of Figs. 4 and 5; and

Fig. 7 is a side view of a final embodiment.

The invention makes use of the pyroelectric properties of polymeric piezoelectric films. Such materials are most commonly used for their piezoelectric properties, mechanical deformation of the film causing creation of an electric charge and vice versa. As is well known, however, they also exhibit pyroelectric properties whereby the application of heat causes an electric charge to be created in the material. One example of this class of material is polyvinylidene fluoride (PVDF), various forms of which are commercially available as KYNAR (trade mark) film from Pennwalt Corporation.

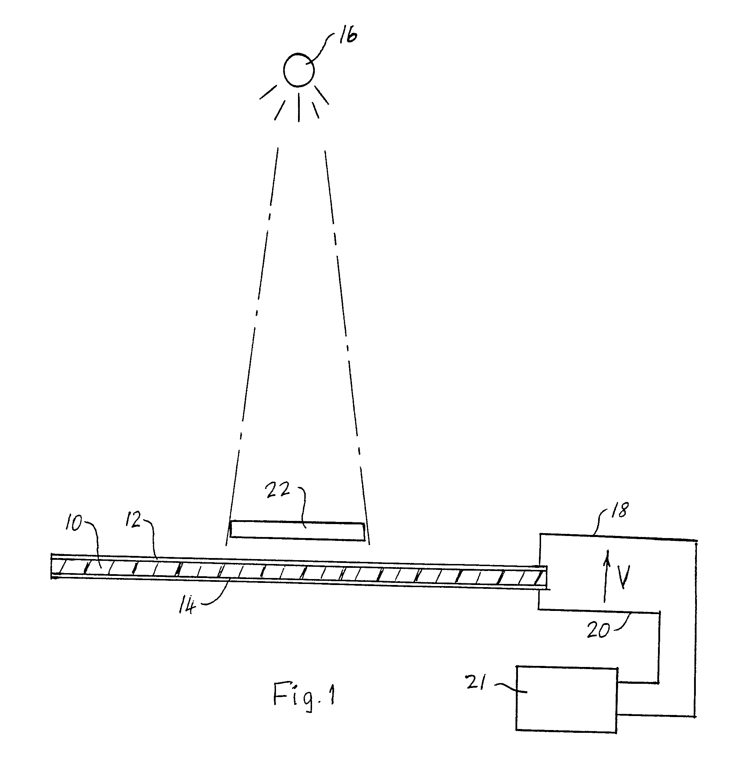

Referring to Fig.1, a PVDF film 10 is provided on its upper surface with a transparent electrode layer 12 and on its underside with an electrode layer 14, both electrode layers being continuous and extending across substantially the whole of the respective surfaces. The transparent electrode layer 12 may, for example, be formed by vapour deposition of silver, and the electrode layer 14 by coating with silver ink. Methods of forming such electrode layers on PVDF film are well known in the art. It will be appreciated that in the drawings thicknesses of films and metallised layers are greatly exaggerated for clarity of illustration. A periodically operable light source 16 is disposed at a distance above the film 10. The light source 16 is suitably a high-intensity flash source such as a xenon discharge tube. Leads 18 and 20 connect the electrodes 12 and 14 respectively to a measurement circuit 21.

If the film 10 is unobstructed and the light source 16 is flashed, the discharge is absorbed over the whole area of the film 10 and the resulting rise in temperature produces a given output signal across the leads 18, 20. If however an object 22 is positioned above the film 10, a lesser area of the film absorbs the discharge energy, and the output signal is reduced. The difference in the amplitude of the signals is proportional to the area of the object 22. The measuring circuit 21 can therefore produce an output directly representing the area of the object 22.

One application of this embodiment is in distinguishing coins of differing values, since the areas of given values are known accurately.

Thus the embodiment of Fig. 1 provides a very simple means of measuring area, but cannot distinguish other characteristics of objects, such as shape or orientation. This embodiment is also limited in application by the fact that a large film with all-over electrodes will have a large capacitance.

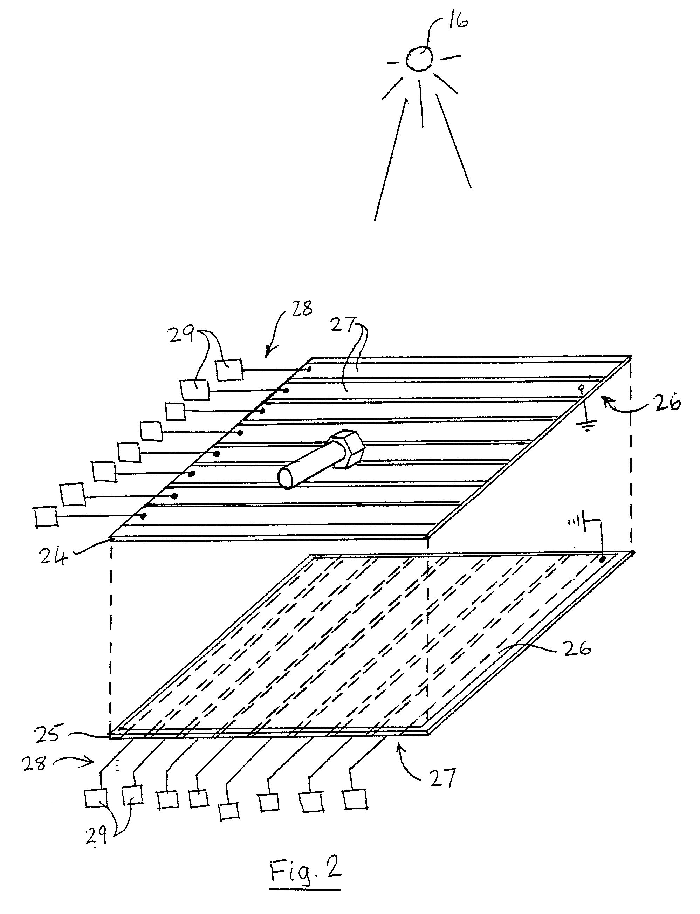

The embodiment of Fig. 2 makes use of two PVDF films 24 and 25, each of which is provided on one surface with a continuous electrode layer 26 and on the other surface with electrode strips 27, the strips of the two films being arranged at right angles to each other. All of the electrodes except the lowest layer are transparent. Each of the elctrode strips 27 is connected by a corresponding lead 28 to a sample-and-hold circuit 29.

The device is illuminated in the same manner as in Fig. 1. If no object is present, a given signal will be produced on each output lead 28; but if an object such as 31 is present, the outputs will be reduced proportionally to the areas obscured. This information can be analysed to derive not only the area of the object 31 (which is a function of the total reduction in output), but also its position on the matrix and its orientation (which are defined by the distribution of this reduction between the rows and columns). Suitably, the output of each strip 27 is held in the respective circuit 29, and the circuits 29 are then read sequentially.

This embodiment is particularly suitable for determining the orientation and/or type of standard objects, for example machine parts progressing along a conveyor which are to be engaged by a robotic manipulator.

In practice, the number of row and column electrodes would be chosen to give a resolution suitable for the particular objects to be "seen" and the degree of positional accuracy required. It may also be possible to provide row and column electrodes on opposite sides of a single film, particularly where only a small area of film is used.

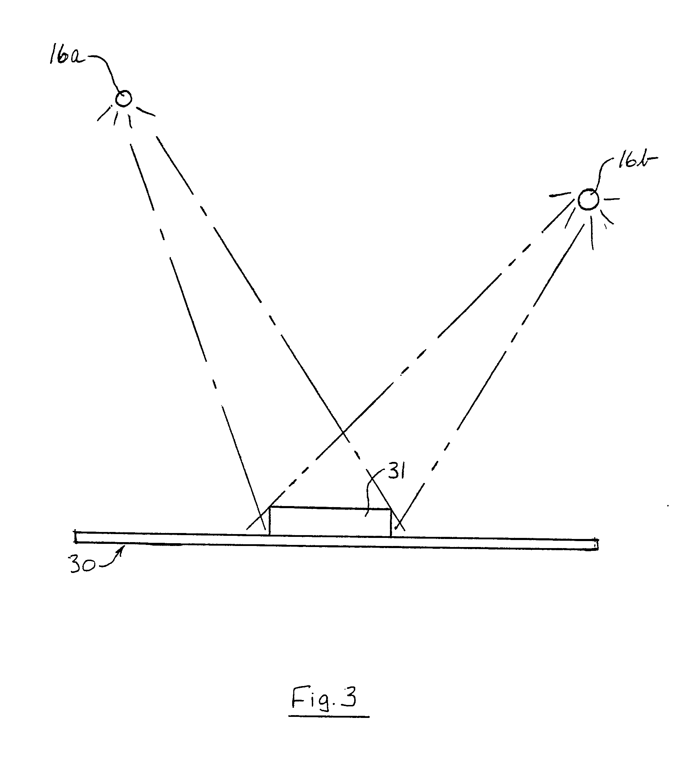

Fig. 3 shows an embodiment which uses the same assembly of films 24 and 25 and associated electrodes as in Fig. 2, this assembly being indicated at 30 in Fig. 3. In this embodiment, however, the object 31 is illuminated by two flash sources 16a and 16b which are located to provide differing angles of illumination and which are flashed at different predetermined frequencies. Each electrode thus gives two sets of outputs which occur at known frequencies and can be separated by suitable gating or filtering. As in Fig. 2, each set of outputs gives information relating to the area, shape and position of the object 31. In addition, however, the difference between the two sets of outputs contains information related to the height of the object 31, because of the differing shadow angles caused by the positioning of the flash sources 16a and 16b.

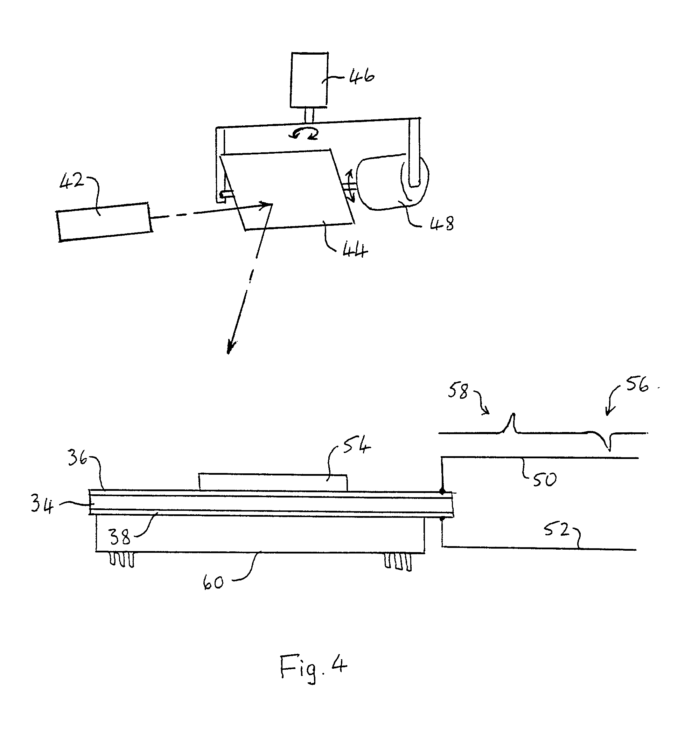

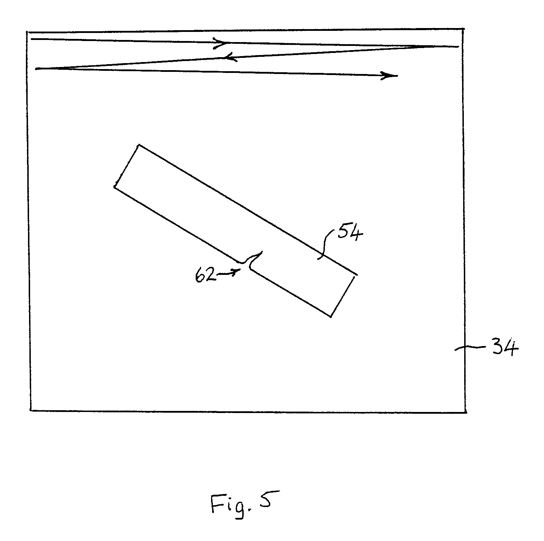

Figs. 4 and 5 illustrate an embodiment in which a PVDF film 34 is provided with continuous electrodes 36 and 38, the upper electrode 36 again being transparent. The area of the film 34 is scanned raster fashion by an infrared laser beam, part of the raster scan being indicated at 40 in Fig. 5. As indicated schematically in Fig. 4, a fixed laser 42 may be positioned above the film 34 and the scan produced by a mirror 44 oscillated in the line direction by a motor 46 and rotated in the frame direction by a second motor 48; other means of producing a scanning beam will be readily apparent to those skilled in the art.

The operation of this embodiment will also be readily understood. So long as the scanning beam impinges on the film 34, a constant heating effect is caused and a constant output appears on leads 50, 52. When the beam is obstructed by an object such as 54, the heating effect is cut off and a negative pulse 56 appears while, whenever the beam clears the object 54, the resumption of heating produces a positive pulse 58. Thus, the positions of the edges of the object in a particular line of the scan can be determined by timing. In order to obtain a suitably fast response, the film 34 is backed by a heat sink 60.

This embodiment can be used to discriminate area, shape or orientation, and is also suitable for detecting light transmitting defects such as the crack shown at 62. The embodiment can operate with translucent objects, and even with transparent objects since scanning of the beam across an edge will produce an output effect due to refraction.

Fig. 5 illustrates a modification of the foregoing embodiment, in which a raster scan is replaced by a feedback arrangement for tracing the outline of the object. The beam from the laser 42 is deflected in rotation at a constant angular velocity by a rotator indicated at 62, such as a motor driven mirror, and is deflected in the radial direction in a variable manner by a deflector indicated at 64, such as a mirror driven by a stepper motor. The deflector is controlled by feedback from the output of the film 34 in such manner that the beam passing over the edge of the object 54 to illuminate the film 34 and thus produce a positive pulse causes the beam to be moved radially inwards and vice versa, whereby the beam traces a zigzag path around the edge of the object, as shown in the lower part of Fig. 5. Since the rotational rate of the beam is constant, the times at which the inward and outward movements occur is a representation of the size and shape of the object.

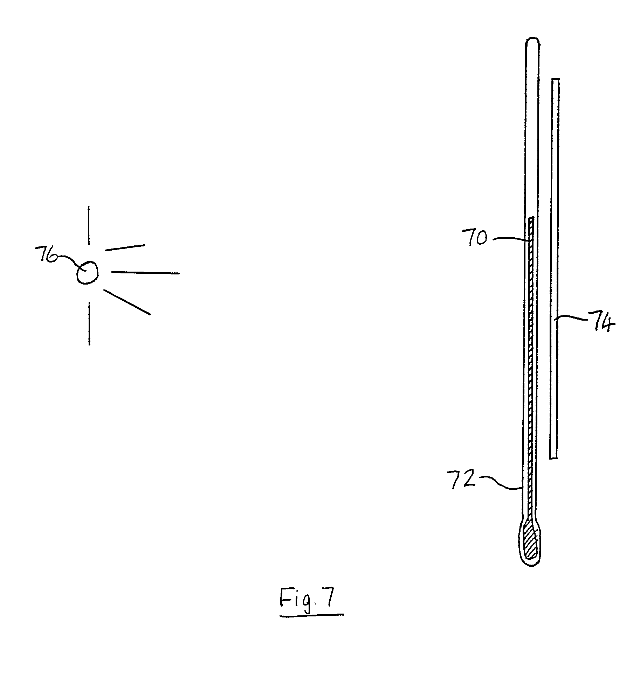

Finally, Fig. 7 illustrates an embodiment for measuring essentially a single dimension, in this instance the height of the mercury column 70 in a mercury thermometer 72. A PVDF film 74 provided with the usual electrodes (not shown) is positioned at one side of the thermometer 72, and a flash source 76 is positioned at the opposite side for periodic operation. The amplitude of the output from the film 74 in response to each flash is a function of the area obscured by the mercury column 70, and thus of the ambient temperature. This embodiment provides a very simple and inexpensive system for remote sensing of temperature using readily available thermometers.

## Claims

1. A method for determining factors related to the silhouette of an object, comprising positioning the object adjacent a sheet material having pyroelectrical properties, exposing the object and the sheet material to thermal radiation thereby inducing electric charge in the sheet material, and measuring the induced charge to derive a measure of said factor.

2. The method of claim 1, in which the object and the sheet material are exposed to a source of infrared light.

3. The method of claim 1, in which the whole area of the sheet material is exposed simultaneously and the total induced charge is measured.

4. The method of claim 1, in which the whole area of the sheet material is exposed simultaneously, and the charges induced in discrete areas thereof are measured separately.

5. The method of claim 1, in which said exposure is by means of a steerable beam.

6. Apparatus for determining factors related to the silhouette of an object, comprising at least one sheet of a polymeric piezoelectric material, transparent electrode means formed on one surface of said sheet, electrode means formed on the other surface of said sheet, circuit means connected to said electrodes for measuring the amplitude of signals therethrough, and a source of thermal radiation at a location spaced from said transparent electrode means for illuminating the sheet and any object placed thereon.

7. The apparatus of claim 6, in which said source is a flash tube.

8. The apparatus of claim 6, including a second sheet of polymeric piezoelectric material coextensive with said first-mentioned sheet, each sheet having on one surface electrode means in the form of metallised strips, the strips on the two sheets being srranged at right angles to each other to form the rows and columns of a matrix.

9. Apparatus according to claim 6, in which the source of thermal radiation is a radiant energy beam source, and including means for deflecting the beam across said one surface of the sheet and any object placed thereon.

10. The apparatus of claim 9, in which said beam source is an infrared laser.

Fig. 1

Fig. 2

16a

16b

31

30

Fig. 3

Fig. 4

Fig. 5

Fig. 6

Fig. 7